# EUROPEAN PATENT SPECIFICATION

(11) **EP 0 712 533 B1**
(45) Date of publication and mention of the grant of the patent: **24.03.1999**
(21) Application number: 94924544.3
(22) Date of filing: 05.08.1994
(51) Int. Cl.: H01J 37/00, G01B 7/34, G02B 21/00

(54) **PROBE MICROSCOPY**
SONDENMIKROSKOPIE
PALPEUR UTILISE DANS LA MICROSCOPIE A BALAYAGE

(30) Priority: 08.08.1993 IL 10661393
(43) Date of publication of application: 22.05.1996
(73) Proprietor: LEWIS, Aaron, Ithaca, NY 14850 (US)
(72) Inventor: LEWIS, Aaron, Ithaca, NY 14850 (US); LIEBERMAN, Klony, Kew Gardens, NY 11415 (US)
(74) Representative: Fuhlendorf, Jörn, Dipl.-Ing.
(86) International application number: US9408691
(87) International publication number: WO9505000

(56) References cited:
- EP-A- 0 535 611
- EP-A- 0 545 538
- EP-A- 0 622 652
- US-A- 4 917 462
- US-A- 5 105 305
- US-A- 5 264 698
- US-A- 5 289 004
- US-A- 5 304 795
- US-A- 5 333 495
- IBM TECHNICAL DISCLOSURE BULLETIN, vol. 35, no. 3, 1 August 1992, pages 150-152, XP000326214 "FUNCTIONALIZED SXM TIP"
- REVIEW OF SCIENTIFIC INSTRUMENTS, vol. 63, no. 9, 1 September 1992, pages 4061-4065, XP000311659 SHMUEL SHALOM ET AL: "A MICROPIPETTE FORCE PROBE SUITABLE FOR NEAR-FIELD SCANNING OPTICAL MICROSCOPY"
- JOURNAL OF VACUUM SCIENCE AND TECHNOLOGY: PART A, vol. 11, no. 4, PART 01, 1 July 1993, pages 742-747, XP000403702 VAEZ-IRAVANI M ET AL: "CORRELATIVE IMAGING IN SCANNING NEAR-FIELD OPTICAL MICROSCOPY"
- APPLIED PHYSICS LETTERS, vol. 61, no. 2, 13 July 1992, pages 139-141, XP000280673 KUCK N ET AL: "VISIBLE ELECTROLUMINESCENT SUBWAVELENGTH POINT SOURCE OF LIGHT"

## Description

### Field of the Invention

The invention is a general purpose device for measuring nanometer scale surface characteristics. The device integrally consists of a very sensitive force sensor for measuring surface topography and forces. The structure of the device also allows for the simultaneous monitoring of a number of other surface characteristics. In addition, the device may also be used for modification and patterning with nanometer scale resolutions.

In particular the invention relates to a device for scanning microscopy comprising a micropipette or a fiber according to the preamble of claim 1 and according to claim 6.

### Background of the Invention

Scanned probe technologies today rely on a microscopically small tip interacting with a surface as the tip is scanned in very close proximity to the surface. The interaction between the tip and the sample can typically be used both to track the surface topography and/or measure other characteristics. The two most common interactions which are utilized are electron tunneling (scanning tunneling microscopy -- STM) and force sensing (scanning force microscopy -- SFM). Tunneling requires a conducting probe and a conducting sample and is thus restricted in its application. Force sensing removes this restriction. Force sensing requires a structure which is sensitive enough to detect the small forces (van der waals, columbic, etc.) that are present at an interface between a tip and a surface which are typically of piconewton magnitude. In addition the probe must be flexible enough so as not to deform the surface as it scans over it. This requires a force constant on the order of 1 Newton/meter.

One of the basic requirements of a probe for practical application of scanned force sensing is to have a sharp, finely tapered tip which can accurately track over and into surface corrugations. If the probe has a blunt or quickly tapered tip, scanning the tip at a constant height above the surface will not produce an accurate rendition of the topography but rather a convolution of the tip structure with the surface. This is particularly significant when force imaging is to be used for metrology applications. A great deal of effort, using sophisticated electron beam deposition techniques, is currently expended in order to produce sharp enough tips for such applications [Basile M.J., et al. Scanned probe tips formed by focussed ion beams , Rev. sci. instrm. 62,2167 (1991); Kado H., Yokoyama K. and Tohda T. A Novel ZnO Whisker Tip for Atomic Force Microscopy, Ultramicroscopy (1992)].

The deflection of the probe induced by the interaction with the surface force is generally detected by optical means. For the detection of normal forces of the surface on the tip, the probe consists of a cantilever with a tip hanging off one end. The forces on this tip are typically measured by focusing a laser beam onto a small spot on the back side of the probe. When the probe bends the small angular deviation of the beam is detected with a position sensitive detector [D. Rugar and P.K. Hansma, Phys. Today, 43, 23 (1990); K. Wickramasinghe, Sci. Am. 26, 90 (1989)]. Alternatively, the motion of the probe and beam can be monitored interferometrically [D. Rugar and P.K. Hansma, Phys. Today 43, 23 (1990); K. Wickramasinghe, Sci. Am. 26, 90 (1989)]. Both techniques require for normal force sensing a small, flat reflecting surface on which to direct the beam. Alternately, lateral force sensing does not depend on a cantilevered structure.

### State of Prior Art

The first normal force cantilevers were fabricated by etching thin wires and mechanically bending them near the tip to produce a cantilevered structure (D. Rugar and P.K. Hansma, Phys. Today 43, 23 (1990); K. Wickramasinghe, Sci. Am. 26, 90 (1989)]. Such probes had a number of problems including control over etching and the difficulty in mechanically bending the tip in a reproducible fashion. In addition such probes are not well suited to optical deflection sensing since they contain no flat region which may be used to reflect a laser beam.

Force cantilevers in common use today are typically microfabricated with conventional microlithography techniques [D. Rugar and P.K. Hansma, Phys. Today 43, 23 (1990); K. Wickramasinghe, Sci. Am. 26, 90 (1989)]. Such probes consist of a thin silicon membrane or cantilever onto which a small sharp cone is produced [D. Rugar and P.K. Hansma, Phys. Today 43, 23 (1990); K. Wickramasinghe, Sci. Am. 26, 90 (1989)]. At the tip of the cone an additional filament is often grown to produce a sharper and finer tapered tip. The mechanical characteristics of such probes are determined by the materials used, tip mass and geometry. Typical force constants for such tips are in the 0.1 to 10 Newton/Meter range. These probes, however, are not very suitable for other forms of scanned probe microscopy.

A device according to the preamble of claim 1 is known from Review of Scientific Instruments 63 (1992) September, No. 9 "A micropipette force probe suitable for near-field scanning optical microscopy". The micropipette has been bent at its end region by using a bunsen flame. At the outer surface of the bend a mirror made of small pieces is attached for monitoring deflection of the cantilevered bent probe structure. Manufacture of this known bent probe structures is complicated and the probes are not sufficiently reproducible. It is therefore an object of the invention to overcome such problems.

### Summary of the invention

The above object is solved by a device and method according to claims 1, 6 and 8.

### Description of the Invention

The device is based on a glass or quartz micropipette or fiber which can be pulled down to a variety of dimensions at the tip with 10 nanometers the smallest outer diameter achieved thus far. The micropipettes remain hollow and can have an inner diameter at the tip of 7.5 nanometers. These probes may be pulled with a very gradual taper giving a cone angle at the tip of only a few degrees, or can be tapered with larger cone angles if the application so requires.

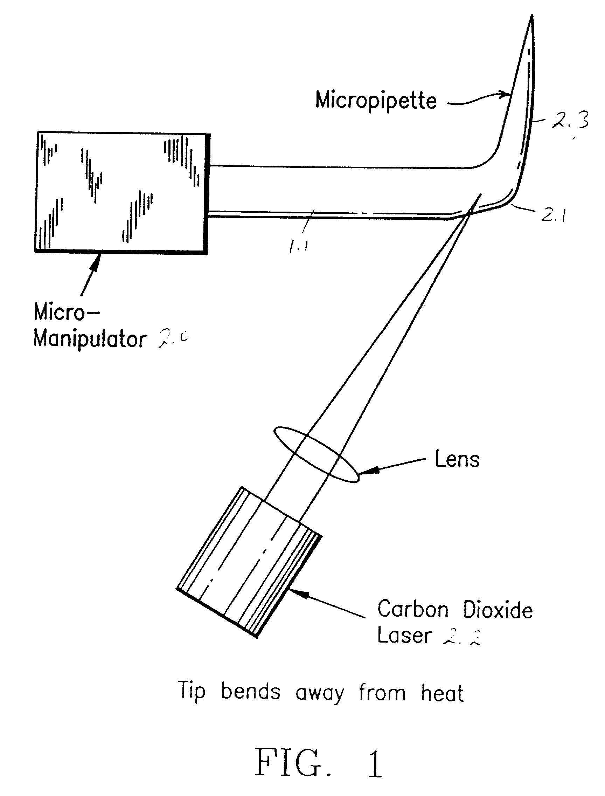

For lateral force sensing nothing further needs to be done. For the addition of normal force sensing the probe is then given a cantilevered structure by locally heating it near the tip and applying a small force to bend the tip when the glass or quartz becomes soft. This is shown schematically in Figure 1. Localized heating is achieved by focusing a CO laser to a small spot near the tip. A stream of air is directed at the tip region while the heating is taking place. This serves two purposes. First, the air cools the tip so that there will not be excessive heat conduction in the glass which could melt the tip of the probe and second, the air flow provides sufficient force to bend the very tip as soon as the glass or quartz becomes sufficiently soft. The bend radius is determined principally by the size of the laser heating spot. Focusing a CO₂ laser down to a diffraction limited 10µ spot can readily produce bends a few 10's of microns from the tip.

Once the cantilevered structure is obtained the crucial polishing step takes place to provide the incorporation of optical deflection sensing techniques. This is done by inserting the cantilevered structure into a micromanipulator and bringing the end of the bent region into contact with a rotating polishing surface as shown in

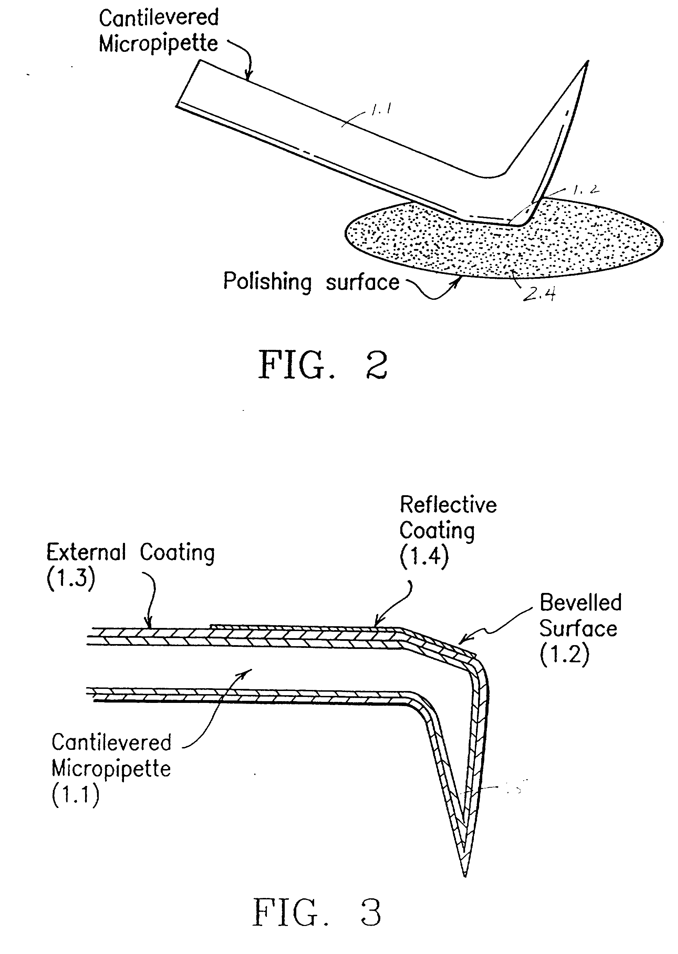

Figure 2. The polished region may be as small as several microns in diameter. This produces an optically flat surface in which a laser beam may be reflected off to monitor the deflection of the cantilever. This polished region is just above the bent section of the tip for maximum deflection sensitivity.

After the tip is bent a reflecting metallic coating may be deposited on the polished section to enhance the reflectivity. A metal coating may be further applied to the entire outer region of a micropipette probe and the walls of a fiber probe to produce a structure which may also be used as a near-field subwavelength point of light.

Such bent polished structures can simultaneously be used to pass light through the device to the tip which, as noted above, can be transformed into a near-field aperture by an appropriate metal coating. With bent fibers light is guided around the bend. With pipettes a high index liquid can be made to fill the pipette void and this also permits the transmission of light around the bend and through the near-field, sub-wavelength aperture at the tip. The resulting sub-wavelength point of light can be used for imaging and patterning while force is used, either normal or lateral, to monitor the topography and force characteristics of the surface. Furthermore, in such a structure the metallic coating at the tip can be used to measure simultaneously tunneling currents to determine the tunneling characteristics. With micropipettes these same structures can be readily filled with an optically or electrically excited light-emitting substance to produce a sub-wavelength source of light with many of the above sensing capabilities. The light emitting substance at the tip of the pipette can also be used to monitor specific ions or sense surface charge. Alternately, micropipette structures can be produced with a metal wire down the hollow interior extending to the tip. The coating of metal on the outside of this structure if it is generated using a different metal from that in the interior, permits the production of a thermal sensor with the force and tunneling characteristics noted above. Such a metal sandwiched glass structure with a transparent glass tip could also be used to propagate light without evanescent losses in the subwavelength region. This structure would be the optical analog to an electrical coax. As another alternative sol-gel conducting glass can also be deposited in the tip and this glass can be embedded with optically excited materials to produce a structure which could monitor optical, electrical and the conductive nature of surfaces. The essence of all these structures are the multichannel sensing capabilities which have been patently absent in scanned probe microscopes because no elements such as the ones noted here have been devised.

### Parts of the Device

A schematic of a device produced according to the present invention is shown in Figure 3. It consists of the following parts:
1. A glass or quartz micropipette tapered to produce a hole at the tip that can be as small as 7.5 nm (part number 1.1),
   or
   A glass or quartz optical fiber tapered to produce a tip outer diameter that can be as small as 10 nanometers (part number 1.1),
   which can be bent, for normal force sensing, near the tip to produce a cantilevered structure and polished just above the bend to produce an optically flat surface (part number 1.2).
2. A material (part number 1.3) such as aluminum or gold optionally deposited along the outer surface of the probe to provide for an opaque coating if required.
3. A material (part number 1.4) such as aluminum deposited on the beveled, polished surface of part 1.1 to provide a reflecting surface.
4. A material (part number 1.5) optionally inserted into the very tip of the micropipette probe which acts as a specific chemical, optical or thermal sensor for various local phenomenon.
5. The probe is incorporated into a micropositioning instrument.
6. The bent probe can be inserted with its micropositioner under the lens of a regular microscope which can be used together with an interferometric measurement through this lens to sense the deflection the micropipette cantilever with the lens also being used for collection of light from the sample and illumination of the sample.

### Operation of the Device

The probe is brought into the near field of the surface by either monitoring lateral force in a non-bent structure or by monitoring the deflection of the cantilever in a bent structure by normal force impinging on the tip of the bent pipette or fiber. Then the structure is scanned along the surface either in contact or in near-contact by monitoring surface forces while the other attributes of the tip are used to monitor simultaneously the chemical, optical, electrical or thermal characteristics of the surface.

### Advantages Over Prior Art

The probes produced with the technique described here have a number of advantages over presently available scanned force probes. First, the initial pulling technique allows for simply and accurately controlling and adjusting the force characteristics and constants of the probe itself. Second, the pulling process naturally produces very sharp and finely tapered tips which are required for accurate force imaging. Conventionally produced tips require a complex and poorly understood growth of a fine filament, with the aid of electron beam deposition techniques, at the tip of the microfabricated cone as an additional step after the sensor is completed. Finally the micropipette and fiber probes allow numerous other surface characteristics to be monitored simultaneously with force sensing. This includes near-field optical interactions and, in the case of the micropipette probe a variety of specific sensors, may be placed within the tip.

## Claims

1. A device for scanning force microscopy comprising a tapered hollow micropipette (1.1) with a hole at the tip, said micropipette having a bend near said tip to produce a cantilevered bent probe structure for normal force sensing; **characterized in that** the micropipette has a polished optically flat surface region (1.2) produced at the outer surface of the bend for monitoring deflection of the cantilevered bent probe structure.

2. Device according to claim 1, wherein said micropipette includes an outer wall surface coating (1.3) to produce a probe for conducting near-field scanning optical microscopy and lithography.

3. Device according to claim 1 or 2, further including a material inserted in said hollow tip region to act as a specific chemical sensor, spectroscopic sensor, surface charge sensor, or other sensor of a local environment at said tip.

4. Device according to claim 2 and 3, wherein said material in said hollow tip region and said outer wall surface coating (1.3) are different metals selected to produce a highly localized thermocouple at said tip.

5. Device according to one of the preceding claims further including a microscope and a micromanipulator (2.0) for mounting said micropipette (1.1) cantilevered bent probe structure under the lens of said microscope for use together with interferometric measurement through the lens to sense the deflection of the micropipette cantilevered bent probe structure by motion of said polished flat surface region (1.2) while using the lens for illumination of the sample and collection of light from the sample.

6. A device fcr scanning force microscopy comprising a tapered optical fiber (1.1) having a tip drawn to an outer tip diameter of 10 nanometers or less, said fiber having a bend near said tip to produce a cantilevered bent probe structure for force sensing; wherein a region of the optical fibre on the outer surface of the bend is polished to provide an optically flat surface region (1.2) for monitoring deflection of the cantilevered bent probe structure.

7. The probe of claim 6, including a microscope and a micromanipulator (2.0) for mounting said fibre cantilevered bent probe structure under the lens of said microscope for use together with interferometric measurement through the lens to sense the deflection of the fibre cantilevered bent probe structure by motion of said polished flat surface region while using the lens for illumiation of the sample and collection of light from the sample.

8. A method for producing cantilevered glass or quartz micropipette or optical fiber probes for use in scanning force microscopy comprising the steps of:
drawing a micropipette or fiber to produce a tapered end portion; heating the end portion at a location a few tens of microns from the tip by using a focused laser beam; and bending the end portion at the heated location by directing a stream of air at the tip region and further polishing an outer surface region of the bend to produce an optically flat polished region for monitoring deflection of the end portion.

9. The method according to claim 8, comprising holding the cantilevered bent probe structure in a micromanipulator and polishing the outer surface of the bent probe using a polishing wheel to provide a reflecting outer surface region of the bend.

## Patentansprüche

1. Vorrichtung für die Rasterkraftmikroskopie mit einer sich im Querschnitt verjüngenden hohlen Mikropipette (1.1) mit einer Öffnung an der Spitze, wobei die Mikropipette eine Biegung in der Nähe der Spitze hat, um einen gebogenen auslegerförmigen Sondenaufbau für die Normalkrafterfassung vorzusehen, dadurch gekennzeichnet, daß die Mikropipette einen polierten optischen flachen Oberflächenbereich (1.2) aufweist, der an der Außenseitenfläche der Biegung erzeugt ist, um die Ablenkung des gebogenen auslegerförmigen Sondenaufbaus zu verfolgen.

2. Vorrichtung nach Anspruch 1, wobei die Mikropipette eine Beschichtung (1.3) an der Außenwandoberfläche aufweist, um eine Sonde zur Durchführung der Nahfeldrasteroptikmikroskopie und Lithographie zu schaffen.

3. Vorrichtung nach Anspruch 1 oder 2, weiterhin mit einem Material, welches in den hohlen Spitzenbereich eingesetzt ist, um als ein spezifischer chemischer Sensor, als ein Spektroskopiesensor, als ein Oberflächenladungssensor, oder als ein anderer Sensor einer lokalen Umgebung an der Spitze zu wirken.

4. Vorrichtung nach Anspruch 2 oder 3, wobei das Material in dem hohlen Spitzenbereich und die Beschichtung (1.3) an der Außenwandoberfläche unterschiedliche Metalle sind, die so ausgewählt sind, daß sie ein sehr begrenztes örtliches Thermoelement an der Spitze bilden.

5. Vorrichtung nach einem der vorhergehenden Ansprüche, weiterhin mit einem Mikroskop und einem Mikromanipulator (2.0), um die Mikropipette (1.1) und die gebogene auslegerförmige Sonde unter der Linse des Mikroskops anzubringen, um diese gemeinsam mit einem Interferenzmeßverfahren durch die Linse einzusetzen, um die Ablenkung der Mikropipette und der gebogenen auslegerförmigen Sonde zu erfassen, nämlich durch die Bewegung des polierten flachen Oberflächenbereichs (1.2), während die Linse zur Beleuchtung der Probe und zum Sammeln des Lichtes von der Probe eingesetzt wird.

6. Vorrichtung für die Rasterkraftmikroskopie mit einer sich im Querschnitt verjüngenden optischen Faser (1.1), die eine Spitze aufweist, die zu einem Spitzendurchmesser von 10 Nanometer oder weniger ausgezogen ist, wobei die Faser eine Biegung in der Nähe der Spitze hat, um einen gebogenen auslegerförmigen Sondenaufbau zur Kraftmessung zu schaffen; wobei ein Bereich der optischen Faser an der Außenoberfläche der Biegung poliert ist, um einen optischen flachen Oberflächenbereich (1.2) zu schaffen, um die Ablenkung der gebogenen auslegerförmigen Sonde zu verfolgen.

7. Sonde nach Anspruch 6, mit einem Mikroskop und einem Mikromanipulator (2.0), um die Faser und damit die gebogene auslegerförmige Sonde unter der Linse des Mikroskops anzubringen, um diese gemeinsam mit einem Interferenzmeßverfahren durch die Linse einzusetzen, um die Ablenkung der Faser und der gebogenen auslegerförmigen Sonde zu erfassen, nämlich durch die Bewegung des polierten flachen Oberflächenbereichs, während die Linse zur Beleuchtung der Probe und zum Sammeln des Lichtes von der Probe eingesetzt wird.

8. Verfahren zur Herstellung von auslegerförmigen Glas- oder Quarz-Mikropipetten oder von optischen Fasersonden, zur Verwendung in der Rasterkraftmikroskopie, mit den Schritten:
Ziehen einer Mikropipette oder einer Faser, um einen sich im Querschnitt verjüngenden Endabschnitt zu erhalten, der Abmessungen an der Spitze von 10 nm oder weniger aufweist;
Erhitzen des Endabschnittes an einer Stelle, die nur wenige 10 µm von der Spitze entfernt liegt, indem ein fokussierter Laserstrahl verwendet wird; und
Biegen des Endabschnitts an der erhitzten Stelle, nämlich durch eine Strömung von Luft, die im Bereich der Spitze anströmt und schließlich Polieren des Außenoberflächenbereichs der Biegung, um einen optischen flachen polierten Bereich zu erzeugen, um die Ablenkung des Endabschnitts zu verfolgen.

9. Verfahren nach Anspruch 8, mit den Schritten:
Halten der auslegerförmig gebogenen Sonde in einem Mikromanipulator und Polieren der Außenoberfläche der gebogenen Sonde, indem eine Polierscheibe eingesetzt wird, um einen reflektierenden Außenoberflächenbereich an der Biegung zu erzielen.

## Revendications

1. Dispositif destiné à la microscopie de forces à balayage comprenant une micropipette creuse conique (1.1) dotée d'un orifice à la pointe, ladite micropipette présentant un coude à proximité de ladite pointe pour produire une structure de sonde coudée saillante afin de détecter les forces normales ; caractérisé en ce que la micropipette présente une surface optiquement plate polie (1.2) formée au niveau de la surface externe du coude pour surveiller la déviation de la structure de sonde coudée saillante.

2. Dispositif selon la revendication 1, dans lequel ladite micropipette inclut un revêtement de surface de la paroi externe (1.3) pour produire une sonde destinée à effectuer une microscopie et une lithographie optiques à balayage de champ proche.

3. Dispositif selon la revendication 1 ou 2, comprenant en outre un matériau inséré dans ladite zone de pointe creuse pour servir de capteur chimique spécifique, de capteur spectroscopique, de capteur de charge superficielle, ou de capteur autre d'un environnement local au niveau de ladite pointe.

4. Dispositif selon les revendications 2 et 3, dans lequel ledit matériau présent dans ladite zone de pointe creuse et ledit revêtement de surface de la paroi externe (1.3) sont des métaux différents sélectionnés pour produire un thermocouple très localisé au niveau de ladite pointe.

5. Dispositif selon l'une quelconque des revendications précédentes, comprenant en outre un microscope et un micromanipulateur (2.0) permettant de monter ladite structure de sonde coudée saillante de la micropipette (1.1) sous la lentille dudit microscope pour une utilisation avec une mesure interférométrique à travers la lentille afin de détecter la déviation de la structure de sonde coudée saillante de la micropipette grâce au déplacement de ladite zone de surface plate polie (1.2) tout en utilisant la lentille pour illuminer l'échantillon et collecter la lumière de l'échantillon.

6. Dispositif destiné à la microscopie de forces à balayage comprenant une fibre optique conique (1.1) ayant une pointe étirée à un diamètre extérieur de pointe inférieur ou égal à 10 nanomètres, ladite fibre présentant un coude à proximité de ladite pointe pour produire une structure de sonde coudée saillante permettant la détection de forces ; dans lequel une zone de la fibre optique sur la surface externe du coude est polie pour fournir une zone de surface optiquement plate (1.2) permettant de surveiller la déviation de la structure de sonde coudée saillante.

7. Sonde selon la revendication 6, incluant un microscope et un micromanipulateur (2.0) pour monter ladite structure de sonde coudée saillante de la fibre sous la lentille dudit microscope pour une utilisation avec une mesure interférométrique à travers la lentille afin de détecter la déviation de la structure de sonde coudée saillante de la fibre grâce au déplacement de ladite zone de surface plate polie tout en utilisant la lentille pour illuminer l'échantillon et collecter la lumière de l'échantillon.

8. Procédé pour produire une micropipette en verre ou en quartz ou des sondes en fibre optique saillantes utilisées lors de la microscopie de forces à balayage comprenant les étapes consistant à :
étirer une micropipette ou une fibre pour produire une partie d'extrémité conique ayant une dimension inférieure ou égale à 10 nm à la pointe ;
chauffer la partie d'extrémité en un point distant de quelques dizaines de microns de la pointe en utilisant un faisceau laser focalisé ; et
couder la partie d'extrémité au niveau du point chauffé en dirigeant un flux d'air sur la zone de la pointe et en outre polir une zone de surface externe du coude pour produire une zone polie optiquement plate permettant de surveiller la déviation de la partie d'extrémité.

9. Procédé selon la revendication 8, comprenant la fixation de la structure de sonde coudée saillante dans un micromanipulateur et le polissage de la surface externe de la sonde coudée à l'aide d'un disque de polissage pour pourvoir le coude d'une zone superficielle externe réfléchissante.
